(19) 

**Europäisches Patentamt**
**European Patent Office**
**Office européen des brevets**

(11) **EP 4 718 846 A1**

(12) **EUROPEAN PATENT APPLICATION**

(43) Date of publication:
**01.04.2026 Bulletin 2026/14**

(21) Application number: **24306569.5**

(22) Date of filing: **26.09.2024**

(51) International Patent Classification (IPC):
**H04N 19/426** (2014.01) **H04N 19/70** (2014.01)
**H04N 19/93** (2014.01)

(52) Cooperative Patent Classification (CPC):
**H04N 19/70; H04N 19/426; H04N 19/93**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **URBAN, Fabrice
  35235 THORIGNE-FOUILLARD (FR)**
• **DUMAS, Thierry
  35700 RENNES (FR)**
• **GALPIN, Franck
  35235 THORIGNE-FOUILLARD (FR)**

(74) Representative: **Vossius & Partner
Patentanwälte Rechtsanwälte mbB
Siebertstraße 3
81675 München (DE)**

(54) **STORING OF SPARSE NEURAL NETWORK MODELS WITH PACKING**

(57) Improved storage of neural network models is provided by not storing zeros and non-zero model data is retrieved using various methods. In one embodiment, signal sparsity information is used to retrieve the position of the coefficients. In another embodiment, if a model tensor is sparse, packing information is signaled. In another embodiment, data is read according to sparsity information and packing information. In another embodiment, signaling is used at a higher level whether sparsity information is present, or inferred to be true or false.

Figure 11

**Description**

**BACKGROUND**

The present application is related to Neural Network (NN) models storage in ROM.

**BRIEF SUMMARY**

The general aspects described herein relate to approaches for neural network models storage in ROM.

According to a first aspect, there is provided a method. The method comprises steps for signaling non-zero coefficients of a neural network model with number and position of the non-zero coefficients without signaling zero coefficients; and, encoding a video signal using the neural network model.

According to a second aspect, there is provided another method. The method comprises steps for parsing a data stream for non-zero coefficients of a neural network model with number and position of the non-zero coefficients without signaling zero coefficients; and, decoding a video signal using the neural network model.

According to another aspect, there is provided an apparatus. The apparatus comprises a processor and a memory. The processor can be configured to operate on digital video data according to the aforementioned methods.

According to another aspect, there is provided an apparatus. The apparatus comprises a processor and a memory. The processor can be configured to encode a block of video or decode video data by executing any of the aforementioned methods.

According to another general aspect of at least one embodiment, there is provided a device comprising an apparatus according to any of the decoding embodiments; and at least one of (i) an antenna configured to receive a signal, the signal including a video block, (ii) a band limiter configured to limit the received signal to a band of frequencies that includes the video block, or (iii) a display configured to display an output representative of the video block.

According to another general aspect of at least one embodiment, there is provided a non-transitory computer readable medium containing data content generated according to any of the described encoding embodiments or variants.

According to another general aspect of at least one embodiment, there is provided a signal comprising video data generated according to any of the described encoding embodiments or variants.

According to another general aspect of at least one embodiment, video data or a bitstream is formatted to include data content generated according to any of the described encoding embodiments or variants.

According to another general aspect of at least one embodiment, there is provided a computer program product comprising instructions which, when the program is executed by a computer, cause the computer to carry out any of the described decoding embodiments or variants.

These and other aspects, features and advantages of the general aspects will become apparent from the following detailed description of exemplary embodiments, which is to be read in connection with the accompanying drawings.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

Figure 1 illustrates a prediction of a current block from a context of reference samples via a NN-based prediction mode.
Figure 2 illustrates an intra prediction mode signaling for a luma coding block.
Figure 3 illustrates matrix multiplication using sparse matrix.
Figure 4 illustrates a matrix multiplication example.
Figure 5 illustrates a matrix multiplication example with packed sparsity.
Figure 6 illustrates a read matrix data and parameters.
Figure 7 illustrates block sparsity signaling.
Figure 8 illustrates a matrix multiplication example with not fully packed sparsity.
Figure 9 illustrates an example of buffer extending to fill a block size.
Figure 10 illustrates another example of buffer extending to fill the block size.
Figure 11 illustrates an example of end of buffer management with zeroes insertion.
Figure 12 illustrates an example of end of buffer management with packed sparsity and zeroes insertion before last elements.
Figure 13 illustrates packed sparsity detection based on distribution of non-zero coefficients.

Figure 14 illustrates one embodiment of an encoding method under the described aspects.
Figure 15 illustrates one embodiment of a decoding method under the described aspects.
Figure 16 illustrates a processor-based system for encoding/decoding under the general described aspects.
Figure 17 illustrates an example of a block-based hybrid video encoder.
Figure 18 illustrates a block diagram of an example video decoder.
Figure 19 illustrates a processor-based system for encoding/decoding under the general described aspects.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.
The context of this invention is Neural Network (NN) models storage in ROM. For example, a NN model can be used in video coding where encoder/decoder contains at least one Neural Network module, for example used in prediction or loop filtering module. Before being loaded into memory for computations involving for example matrix multiplications, the model is stored in Read Only Memory (ROM), or file.

### Neural network-based intra prediction

In the described embodiments, the broadest definition of the neural network-based intra prediction is used. That is "neural network-based intra prediction" refers to an intra prediction tool in which a series of one or several layers, a layer containing an affine (or linear) transformation optionally followed by a non-linear function, computes a prediction of the current block from already reconstructed pixels around the current block. Under this definition, the neural network-based intra prediction in the following example, is an example of "neural network-based prediction".

### Neural network (NN)-based intra prediction

In the hybrid block-based video codec testing neural networks for video coding on top of VVC, called Neural Network Video Coding (NNVC), currently NNVC-10.0, the neural network (NN)-based intra prediction (NNIP) works as summarized below. NN models are implemented using SADL (Small Adhoc Deep-Learning Library) library [1].

### *Neural network inference*

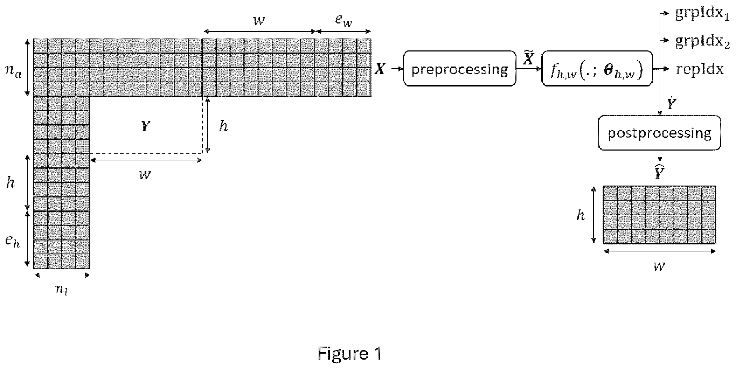

The NN-based intra prediction mode contains 7 NNs, each predicting blocks of a different size in $\{4 \times 4, 8 \times 4, 16 \times 4, 32 \times 4, 8 \times 8, 16 \times 8, 16 \times 16\}$. The NN predicting blocks of size $w \times h$ is denoted $f_{h,w}( \, . \, ; \theta_{h,w})$ where $\theta_{h,w}$ gathers its parameters. For a given $w \times h$ block $Y$, $f_{h,w}( \, . \, ; \theta_{h,w})$ takes a preprocessed version $\tilde{X}$ of the context X made of $n_a$ rows of $n_l + 2w + e_w$ reference samples located above this block and $n_l$ columns of $2h + e_h$ reference samples on its left side to provide $\dot{Y}$. The application of a postprocessing to $\dot{Y}$ yields a prediction $\hat{Y}$ of $Y$, see Figure 1. Besides, $f_{h,w}( \, . \, ; \theta_{h,w})$ returns two indices grpIdx$_1$ and grpIdx$_2$. grpIdx$_i$ denotes the index characterizing the Low Frequency Non-Separable Transform (LFNST) set index and whether the primary transform coefficients resulting from the application of the Discrete Cosine Transform (DCT)-2 horizontally and the DCT-2 vertically to the residue of the neural network prediction are transposed when lfnstIdx = $i$, $i \in \{1, 2\}$. lfnstIdx denotes the LFNST index. lfnstIdx = 0 indicates that LFNST is not used for coding $Y$. lfnstIdx $\in \{1, 2\}$ means that LFNST is used for coding $Y$, involving the kernel of index lfnstIdx - 1 inside the LFNST set of given index. Furthermore, $f_{h,w}( \, . \, ; \theta_{h,w})$ gives the index repIdx $\in [0,66]$ of the VVC intra prediction mode (PLANAR or DC or directional intra prediction mode) whose prediction of $Y$ from the reference samples surrounding $Y$ best represents $\hat{Y}$.

### *Signaling*

### *Signaling in luma*

For the current $w \times h$ luma CB whose top-left pixel is at position (x, *y*) in the current luma channel, the intra prediction mode signaling in luma is split into two cases.

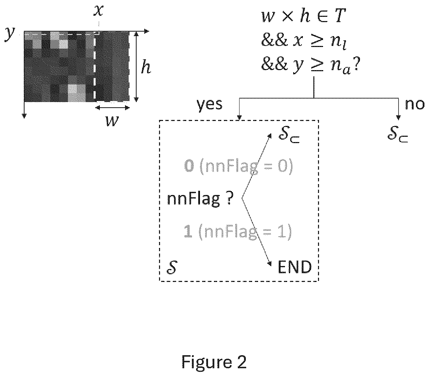

- If $w \times h \in$ T, nnFlag appears in the intra prediction mode signaling in luma. nnFlag = 1 means that the NN-based intra prediction mode is selected to predict the current luma CB and END. nnFlag = 0 means that the NN-based intra prediction mode is not selected to predict the current luma CB, then the regular intra prediction mode signaling in luma, denoted $S_\subset$, applies, see Figure 2.
- Otherwise, the regular intra prediction mode signaling in luma $S_\subset$ applies.

$T$ = {4 × 4, 4 × 8, 8 × 4, 4 × 16, 16 × 4, 4 × 32, 32 × 4, 8 × 8, 8 × 16, 16 × 8,8 × 32, 32 × 8,16 × 16, 16 × 32, 32 × 16,32 × 32, 64 × 64}.

Note that, in the case "w × h ∈ $T$ && nnFlag = 1", if the context of the current luma CB goes out of the bounds of the current luma channel, i.e. $x < n_l \| y < n_a$, the NN-based intra prediction is replaced by PLANAR.

### Signaling in chroma

For the current pair of w × h chroma CBs having top-left pixel at position (x, y) in the current pair of chroma channels, the intra prediction mode signaling in chroma is split into two cases.

- If the luma CB collocated with this pair of chroma CBs is predicted by the NN-based intra prediction mode:

    ○ If $w × h ∈$ T, the Direct Mode (DM) becomes the NN-based intra prediction mode.
    ○ Otherwise, the DM is set to PLANAR.

- Otherwise:

    ○ If w × $h ∈$ T, nnFlagChroma appears in the intra prediction mode signaling in chroma. nnFlagChroma is placed before the DM flag in the decision tree of the intra prediction mode signaling in chroma. nnFlagChroma = 1 means that the NN-based intra prediction mode is selected to predict the current pair of chroma CBs and END. nnFlagChroma = 0 means that the NN-based intra prediction mode is not selected to predict the current pair of chroma CBs, then the regular intra prediction mode signaling in chroma resumes from the DM flag.
    ○ Otherwise, the regular intra prediction mode signaling in chroma applies.

Note that, in the case where "w × $h ∈$ $T$ and the DM becomes the NN based intra prediction mode" and the case where "w × $h ∈$ $T$ && nnFlagChroma = 1", if the context of the current chroma CB goes out of the bounds of the current chroma channel, i.e. $x < n_l \| y < n_a$, the NN-based intra prediction is replaced by PLANAR.

### Transformation of the context and neural network prediction

For a given $w × h$ block, if $w × h ∈$ $T$, it is possible that the NN-based intra prediction mode must predict this block, but the NN-based intra prediction mode does not contain $f_{h,w}( . ; \theta_{h,w})$. In this case, the context of the current block can be down-sampled vertically by a factor $\delta$ and/or down-sampled horizontally by a factor y and/or transposed before the step called "preprocessing" in Figure 1. Then, the prediction of the current block can be transposed and/or up-sampled vertically by the factor $\delta$ and/or up-sampled horizontally by the factor y after the step called "postprocessing" in Figure 1. The transposition of the context of the current block and the prediction, $\delta$, and y are chosen so that a neural network belonging to the NN-based intra prediction mode is used for prediction, see Table 1.

**Table 1: decision of transposing the context of the current $w × h$ block to be predicted and the prediction of this block, the value of $\gamma$, and the value of $\delta$, and the neural network belonging to the NN-based intra prediction mode used for prediction for each $w × h ∈$ T.**

| $w × h$ | transposition | $\gamma$ | $\delta$ | NN used for prediction |
|---|---|---|---|---|
| 4 × 4 | no | 1 | 1 | $f_{4,4}( ., \theta_{4,4})$ |
| 8 × 4 | no | 1 | 1 | $f_{4,8}( ., \theta_{4,8})$ |
| 4 × 8 | yes | 1 | 1 | $f_{4,8}( ., \theta_{4,8})$ |
| 16 × 4 | no | 1 | 1 | $f_{4,16}( ., \theta_{4,16})$ |
| 4 × 16 | yes | 1 | 1 | $f_{4,16}( ., \theta_{4,16})$ |
| 32 × 4 | no | 1 | 1 | $f_{4,32}( ., \theta_{4,32})$ |
| 4 × 32 | yes | 1 | 1 | $f_{4,32}( ., \theta_{4,32})$ |
| 8 × 8 | no | 1 | 1 | $f_{8,8}( ., \theta_{8,8})$ |
| 16 × 8 | no | 1 | 1 | $f_{8,16}( ., \theta_{8,16})$ |

(continued)

| $w \times h$ | transposition | $\gamma$ | $\delta$ | NN used for prediction |
|---|---|---|---|---|
| $8 \times 16$ | yes | 1 | 1 | $f_{8,16}(\cdot, \theta_{8,16})$ |
| $32 \times 8$ | no | 2 | 1 | $f_{8,16}(\cdot, \theta_{8,16})$ |
| $8 \times 32$ | yes | 1 | 2 | $f_{8,16}(\cdot, \theta_{8,16})$ |
| $16 \times 16$ | no | 1 | 1 | $f_{16,16}(\cdot, \theta_{16,16})$ |
| $32 \times 16$ | no | 2 | 1 | $f_{16,16}(\cdot, \theta_{16,16})$ |
| $16 \times 32$ | no | 1 | 2 | $f_{16,16}(\cdot, \theta_{16,16})$ |
| $32 \times 32$ | no | 2 | 2 | $f_{16,16}(\cdot, \theta_{16,16})$ |
| $64 \times 64$ | no | 4 | 4 | $f_{16,16}(\cdot, \theta_{16,16})$ |

**Sparse matrices**

A sparse matrix or sparse array is a matrix in which most of the elements are zero. In NN prediction with large matrices, these matrices tend to be sparse. One advantage is the reduction of the complexity of the model because zero coefficients don't need to be processed.

When storing and manipulating sparse matrices on a computer, it is beneficial and often necessary to use specialized algorithms and data structures that take advantage of the sparse structure of the matrix.

**Coordinate list (COO)**

COO stores a list of (row, column, value) tuples. Ideally, the entries are sorted first by row index and then by column index, to improve random access times.

**Compressed sparse row (CSR, CRS or Yale format)**

The compressed sparse row (CSR) or compressed row storage (CRS) or Yale format represents a matrix M by three (one-dimensional) arrays, that respectively contain nonzero values, the extents of rows, and column indices. It is similar to COO, but compresses the row indices. This format allows fast row access and matrix-vector multiplications (Mx). Compressed sparse column (CSC or CCS) is similar to CSR except that values are read first by column.

The CSR format stores a sparse $m \times n$ matrix M in row form using three (one-dimensional) arrays (V, COL_INDEX, ROW_INDEX). Let NNZ denote the number of nonzero entries in M. (Note that zero-based indices shall be used here.)

The arrays V and COL_INDEX are of length NNZ, and contain the non-zero values and the column indices of those values respectively. COL_INDEX contains the column in which the corresponding entry V is located.

The array ROW_INDEX is of length m + 1 and encodes the index in V and COL_INDEX where the given row starts. This is equivalent to ROW_INDEX[j] encoding the total number of nonzeros above row j. The last element is NNZ , i.e., the fictitious index in V immediately after the last valid index NNZ - 1.

For example, the matrix

$$\begin{pmatrix} 5 & 0 & 0 & 0 \\ 0 & 8 & 0 & 0 \\ 0 & 0 & 3 & 0 \\ 0 & 6 & 0 & 0 \end{pmatrix}$$

is a $4 \times 4$ matrix with 4 nonzero elements, hence

    V =[5 8 3 6]
    COLINDEX = [0 1 2 1]
    ROW INDEX=[0 1 2 3 4]

assuming a zero-indexed language.

To extract a row, we first define:

$$\text{row\_start} = \text{ROW\_INDEX}[\text{row}]$$

$$\text{row\_end} = \text{ROW\_INDEX}[\text{row} + 1]$$

Then we take slices from V and COL_INDEX starting at row_start and ending at row_end.

To extract the row 1 (the second row) of this matrix we set row_start=1 and row_end=2. Then we make the slices V [1:2] = [8] and COL_INDEX[1:2] = [1]. We now know that in row 1 we have one element at column 1 with value 8.

In this case the CSR representation contains 13 entries, compared to 16 in the original matrix. The CSR format saves on memory only when NNZ < (m (n - 1) - 1) / 2.

When the matrix has only one column (vector case), only V and ROW_INDEX are defined. Note that if the matrix dimensions are defined and the computation using the matrix is regular (e.g. matrix elements are accessed in raster scan), matrix data can be stored as a vector.

Other sparse representation format example

Many other sparse matrix representation formats exist. One example is:

- storing raw non-zero values in a vector
- storing number of non-zero elements per row (resp column)
- storing the column (resp row) index of each non-zero element in each row (resp column)
- optionally storing the total number of non-zero elements in the matrix (otherwise can be deduced from non-zero elements per row)

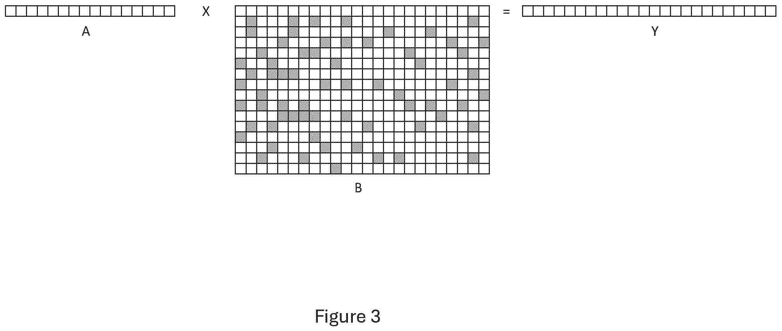

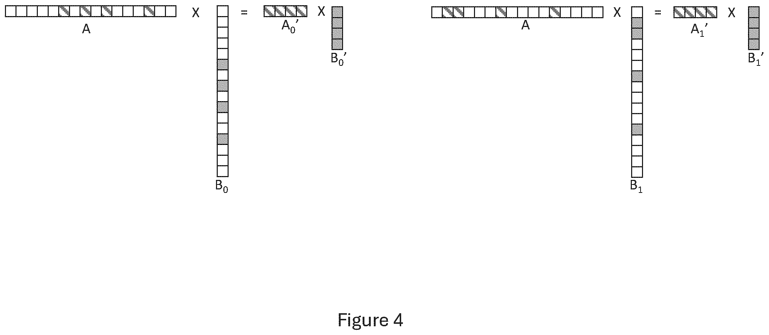

With this format, matrix multiplication can be implemented by accessing each non-zero number of matrix elements of the column (resp row), stored contiguously and elements of the other operand (vector or matrix) with the index offsets from the stored indices as depicted on Figure 3 and Figure 4.

Note that this format is convenient for matrix multiplication, but individual element of the matrix cannot be directly accessed.

In Figure 4, the vector A0' may not be explicitly computed. It is obtained from A, where only elements referred to by the indices associated to the given column of B being processed (i.e. corresponding to non-zero elements of B) are kept. Thus A0' may be computed on the fly, either element per element for classical matrix multiplication implementation, or by several element if the matrix multiplication is implemented using some parallelism such as SIMD (Single Instruction Multiple Data) instructions.

**Packing of non-zero data**

Matrix multiplications on modem processors can take advantage of SIMD (Single Instruction Multiple Data) instructions, also called vectorized instructions. The principle is to perform the same operation on multiple contiguous elements in memory. The main advantage is to leverage the full hardware memory bit-depth to access multiple elements at the same time and perform operations in parallel. This can significantly accelerate the matrix multiplication.

However, because of the sparse characteristic, elements of at least one of the operands are not contiguous and require an indirection (offset different for each element) (Figure 4), which reduces SIMD performances. To overcome this, matrix sparsity should be constrained by block, where non-zero elements are packed contiguously.

For example, if the matrix is a result of a learning algorithm, the packing of non-zero coefficients can be obtained with a specific learning algorithm. This is often obtained at the cost a reduced performance in terms of prediction or fitting of the matrix. In other words, the result is a computation complexity vs. prediction performance compromise.

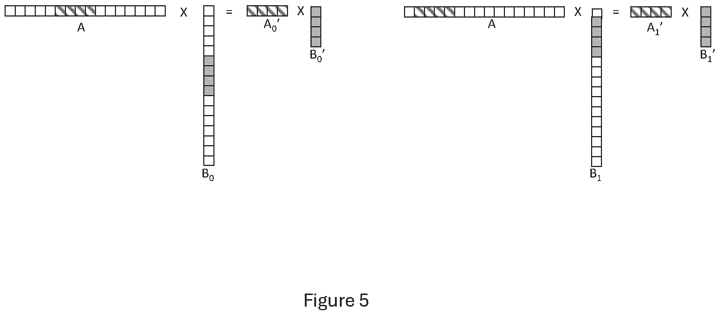

When the packing of the non-zero elements is adapted to the hardware, all the non-zero elements for one SIMD instruction (corresponding to the SIMD instruction bit-depth) can have the same offset and are thus contiguous (Figure 5).

**Storage of NN models**

A NN model is usually composed of several layers. Layers have interconnection parameters. Each layer has parameters, operation types and coefficients. Coefficients are typically large sparse matrices.

This data can be stored in binary format in a model file, where each parameter is stored using appropriate representation (i.e. floating point, integer, 8 to 64 bits are some examples).

The software can load the model file to create and initialize the model. In this stage, all the model parameters such as layer interconnections or coefficients are read from the file.

For software implementation the NN data can be stored in header files that can be compiled with the software (e.g. ".h" files included in the code). The example below shows a NN model in a .h file where the binary data has been formatted as hexadecimal code on 32-bit words. Data is stored in the variable "model_4_4" that will be typically stored into ROM once the software is on the device. At run-time, for example when the software is initialized, the data is read from the ROM, the model file is loaded, and the model is stored in the RAM for computation.

```
static const unsigned int model_4_4[] = {

0x4C444153,0x32303030,0x00000002,0x00000017,0x00000001,0x00000000,0x00000003,0x00000012

,0x00000016,0x0000000E,0x00000000,0x00000002,0x00000006,0x73677261,0x0000305F,0x00020000

,0x00010000,0x00700000,0x00070000,0x00010000,0x00010000,0x00390000,0x72700000,0x63696465

,0x6E6F6974,0x75656E5F,0x5F6C6172,0x7774656E,0x2F6B726F,0x736E6564,0x2F305F65,0x4D74614D

,0x522F6C75,0x56646165,0x61697261,0x4F656C62,0x00303A70,0x02000000,0x70000000,0x80000000

,0x02000002,0x0E000000,0x00000000,0x00000000,0x00000000,0x00000000,0x00000000,0x00000000

,0x00000000,0x00000000,0x00000000,0x00000000,0x00000000,0x00000000,0x00000000,0x00000000

,0x00000000,0x00000000,0x00000000,0x00000000,0x00000000,0x00000000,0x00000000,0x00000000

,0x00000000,0x00000000,0x00000000,0x00000000,0x00000000,0x00000000,0x00000000,0x00000000

,0x00000000,0x00000000,0x00000000,0x2E000000,0x000000F1,0x00000000,0x00000000,0x00000000

,0x00000000,0x00000000,0x00000000,0x00000000,0x00000000,0x00000000,0x00000000,0x00000000

,0x00000000,0x00000000,0x00000000,0x00000000,0x00000000,0x00000000,0x00000000,0x00000000

,0x00000000,0x00000000,0x00000000,0x00000000,0x00000000,0x00000000,0x00000000,0x00000000

,0x00000000,0x00000000,0x00000000,0x00000000,0x00000000,0x00000000,0x00000000,0x00000000

,0x00000000,0x00000000,0x00000000,0x00000000,0x00000000,0x00000000,0x00000000,0x00000000

,0x00000000,0x00000000,0x00000000,0x00000000,0x00000000,0x00000000,0x00000000,0x00000000
```

```
,0x00000000,0x00000000,0x00000000,0x00000000,0x00000000,0x00000000,0x00000000,0x00000000
,0x00000000,0x00000000,0x00000000,0x00000000,0x00000000,0x1C000000,0x000000F2,0x00000000
,0x00ECA800,0x00000000,0x00000000,0x00000000,0x00000000,0x00000000,0x00000000,0x00000000
,0x00000000,0x00000000,0x00000000,0x00000000,0x00000000,0x00000000,0x00000000,0x00000000
,0x00000000,0x00000000,0x00000000,0x00000000,0x00000000,0x00000000,0x00000000,0x00000000
,0x00000000,0x00000000,0x00000000,0x00000000,0x00000000,0x00000000,0x00000000,0x00000000
,0x00000000,0x00000000,0x00000000,0x00000000,0x00000000,0x00000000,0x00000000,0x00000000
,0x00000000,0x00000000,0x00000000,0x00000000,0x00000000,0x00000000,0x00000000,0x37000000
,0x000000EC,0x00000000,0x00000000,0x00000000,0x00000000,0x00000000,0x00000000,0x00000000
,0x00000000,0x00000000,0x00000000,0x00000000,0x00000000,0x00000000,0x00000000,0x00000000
,0x00000000,0x00000000,0x00000000,0x00000000,0x00000000,0x00000000,0x00000000,0x00000000
,0x00000000,0x00000000,0x00000000,0x00000000,0x00000000,0x00000000,0x00000000,0x00000000
,0x00000000,0x00000000,0x00000000,0x00000000,0x00000000,0x00000000,0x00000000,0x00000000
,0x00000000,0x00000000,0x00000000,0x00000000,0x00000000,0x00EA4400,0x00000000,0x00000000
};
```

NN models can be very large and contain a large amount of zero coefficients stored in ROM. Additionally the size of the source code is very large. Storing a sparse model can save space but needs to be signaled in the file format. In addition, characteristics of sparsity such as non-zero elements packing is not handled.

Additionally, to use sparse computation and improve execution time, sparsity and other characteristics need to be analyzed and measured during an initialization phase for each model. Computation time can be saved if this information is directly read from the model description file.

In order to save ROM and reduce the size of the source code, the storage of Neural Network models is modified. Zeros are not stored, and some mechanism is used to retrieve the position of the coefficients.

- signal sparsity information for each tensor
- if tensor is sparse, signal packing information
- read data according to sparsity information and packing information
- signal at a higher level that the sparsity information is present (or inferred to always true, or always false)

As explained before, NN models can be very large and contain many zeros (because of the sparse property of the models) coefficients stored in ROM and source code, taking unnecessary space.

To reduce the storage footprint of the NN model, zeros (null coefficient) are not coded. Only non-zero coefficients are signaled in a file together with their number and position. Additional characteristics such as non-zero packing can also be signaled in the file.

## Sparse storage signaling

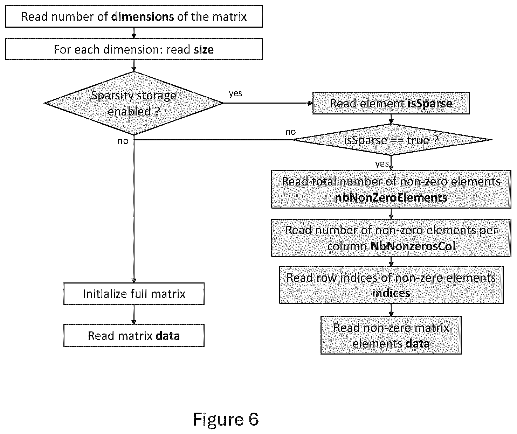

For each data matrix, the process depicted on Figure 6 is used to read the data from file or ROM. The data can be sparse.

First, the number of dimensions is read, and for each dimension, the size is read. For example, the number of dimensions is 2 and the matrix size is 256x2024. If global sparse storage is enabled, a flag isSparse is read, otherwise the full matrix is initialized, and the full matrix data is read. Global sparse storage is enabled for example based on a version number read from the model description file (e.g. if version >= 5), or a high-level flag (signaled once for the model, and valid for all the data).

If the syntax element isSparse is false, the full matrix is read, otherwise, if true, sparse matrix data is read: total number of non-zero elements *nbNonZeroElements,* the number of non-zero elements per column (resp. row) *nbNonZerosCol,* the row indices of non-zero elements for each column *indices,* and the non-zero matrix elements *data.*

**Packed sparsity signaling**

As explained before, sparse representation can save memory and raw number of calculations, but vector operations need an extra step to make the data usable for SIMD instructions. To avoid this extra step, the matrix can have packed sparsity, with non-zero elements contiguous.

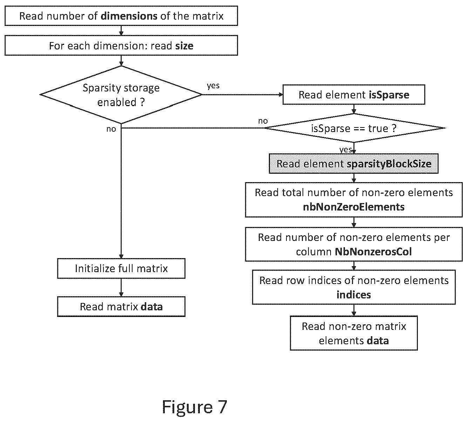

Packed sparsity can improve acceleration of SIMD instructions but require to be known. If the matrix is sparse, an additional element *sparsityBlockSize* is signaled in the file to specify the contiguous packed number of non-zero matrix elements, as depicted on Figure 7.

Usually, sparsityBlockSize is set to a value adapted to the target SIMD instruction bit-width. For example, to be efficient for 256-bits vector computation units with 16-bits element, a packing of sparsityBlockSize=16 is appropriate (16*16 = 256).

Note 1: usually the matrix comes from a learning algorithm that need to learn specifically the packed sparsity.

Note 2: in practice, prediction performance with higher packed sparsity constraint decreases compared to unconstrained sparsity. As a compromise, in practice sparsityBlockSize=8 requires only 2 non-contiguous load operations (instead of 16 for unconstrained sparsity) to fill a 256-bits vector and can lead to an efficient implementation.

**Operation dependent sparsity model**

In an embodiment, the sparse representation can be adapted to the operation.

Before reading the matrix data, an element *sparseFormat* is read, defining the format used for matrix storage.

Then, depending on the sparseFormat value (e.g. CSR, CRS, COO, format in 1.3.3...) the appropriate elements are read from file or ROM.

In a variant, sparseFormat value is not signaled, but inferred from the operation (stored in the model description) the matrix data will be used for. For example, format in 1.3.3 is used for matrix multiplication, COO is used for transposition, CSR is used for a down-sampling or up-sampling operation.

**Optional Initialization step**

After reading the data, the matrix can be readily used for computation, without needing to allocate the full matrix and save memory space. However, an initialization step can be used. For example, to rebuild the full matrix from a sparse representation, or convert from the sparse representation used at storage to a sparse representation more suitable for computation. For example, if random access to a matrix element is needed, CSR or CRS formats are more suitable. Initialization of the full matrix may be needed if computation from sparse storage is not available (i.e. not implemented for a given operation) for example.

Matrices can be sparse even if sparsity is not signaled (e.g. previous model version number, global sparse storage disabled, packed sparsity not signaled, ...). In that case it is still useful to detect matrix sparsity, from the full matrix representation during an initialization step. If the matrix is sparse it is converted to a sparse representation for computation.

The methods described below can be used for signaling purpose, or as an initialization step. If it is used at initialization step, the matrices are evaluated each time they are loaded, increasing the initialization overhead of the process, whereas if packing sparsity is signaled, initialization time and memory footprint can be reduced.

**Generalization to not fully packed data**

For various reasons the packed data may not be fully non-zero. For example, the learning algorithm has not been designed for packed sparsity, or the quantization of coefficients zeroes out small non-zero coefficients. The sparsity may be obtained with zero-coefficient ranges between non-zero coefficients. In that case, treating the data as packed may still improve the implementation, as SIMD instructions will accelerate the computations.

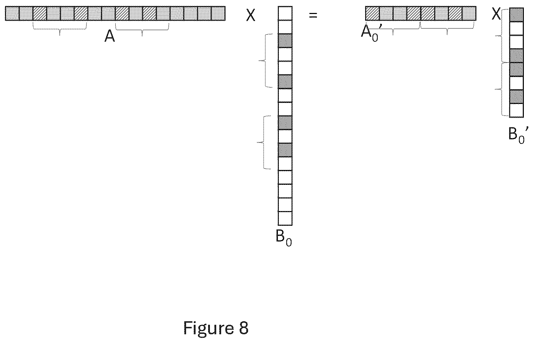

An example is given on Figure 8. The matrix column B0 has ranges of zero-coefficients between non-zero blocks. Coefficients before, between and after the non-zero coefficients blocks are removed. Corresponding elements of vector A are chosen. Indices of data within the same block (or pack) of A0' are consecutive. The size of a block depends on the SIMD implementation and should be the size of a SIMD buffer. For example, 8 16-bits elements for 128-bit SIMD buffer.

Zero-coefficients within a block are kept in sparse matrix B' to keep the indices of used elements of vector A contiguous within a block.

The same as before can be used to store the model.

In a variant, sparsityBlockSize is signaled in the model, but if indices are not contiguous within a block, indices and zero-coefficients are inserted to recreate contiguous indices and enable packed sparse computations.End of buffer management

Because data may be treated by block in a SIMD implementation, special care must be taken at the end of the matrix column and the vector to avoid processing out of bound data.

This embodiment may be used with or without packing of non-zero elements.

**End of buffer management with buffer extension**

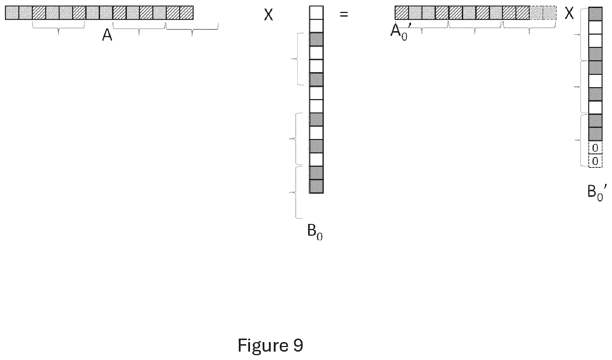

The first solution consists of extending the column and vector by the size needed to fill the block. As depicted on Figure 9, the size of the last non-zero block of the column B0 is lower than the size of a SIMD buffer. A0' and B0' are obtained by adding 2 zero elements at the end of the matrix column B0.

The vector A0' is also extended. The value that is used for extension can be undefined because it is computed on the fly and will be multiplied by zero. For example, using the last used value is good practice because it avoids polluting the data cache. The indices buffer is thus extended by replicating the last index of non-zero element to reach the number of extended non-zero element in the matrix column B0'. This works when the implementation of the matrix multiplication doesn't use parallelism or accesses data in A, element per element, i.e. not using packed sparsity.

If packed sparsity is used, the data in A are accesses block by block. The vector A needs to be extended as well to avoid out of bound memory accesses. A is thus extended using zeroes.

**End of buffer management with zeroes insertion before the last elements**

Another solution consists of changing the indices of last elements in vector A and inserting zero elements in the columns of B before the non-zero elements of the last block. The advantage of doing this is that the vector A doesn't need to be modified (extended). This may improve memory accesses.

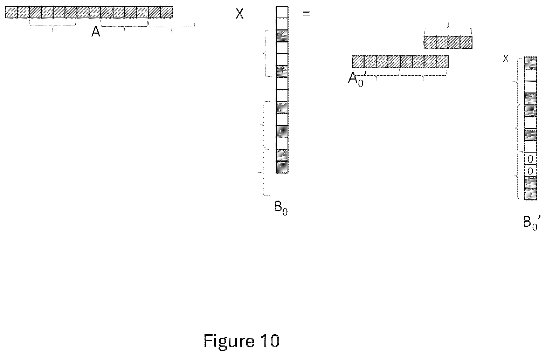

As depicted on Figure 10, the size of the last non-zero block of the column B0 is lower than the size of a SIMD buffer. A is not modified. only B0' and corresponding indices are modified by inserting 2 zero elements at the beginning of the last block. The indices referring to the elements of A for the last block are thus modified accordingly by decreasing the position of the last block by the number of inserted zeroes.

Note that the last blocks in A0 (i.e. the indices identifying the last blocks) may overlap. This is not a problem because the redundant values are multiplied by the inserted zeroes.

**Implementation example of end of buffer management with zeroes insertion before the last elements**

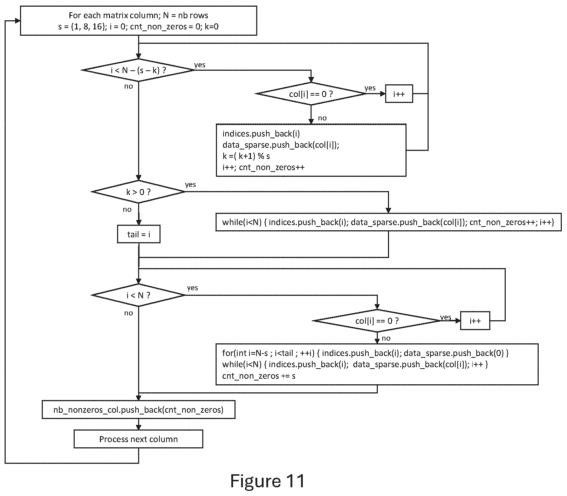

An exemplary of buffer management with zeroes insertion before the last element is shown in Figure 11. For each column of the matrix, the sparse data is computed. Inputs are the original matrix column col, its length N, the SIMD block size s. Outputs are the non-zero elements data_sparse, the number of elements per column in data_sparse nb_nonzeros_col, the offset indices of each non zero coefficient indices.

In the first part, non-zero element of the column are pushed to the output column, with their indices and their count, while i < N - (s - k): the remainder of the column has just the size of a block, or the number of elements to fill the current block, k being the index of each non-zero element in a block in the output column.

Then, if k>0, it means a new block has been started and not filled. Because of the previous condition (i < N - (s - k)), the remaining number of elements is just the necessary number to fill the block. So, regardless of whether the elements are zero or not, the remaining elements are pushed to the output sparse column, together with their indices. Then the number of elements (non-zero and remaining elements) for the sparse column is stored in nb_zeros_col, and next column is processed.

Otherwise, if i<N, the value of i is saved into the variable named tail. it is checked whether there is a non-zero element in the remaining and stops at the first one. If there is a non-zero element, a new block is created with indices corresponding to the last elements of the column, the values in sparse data are set to zero until index tail, the remaining are copied from input column data. Then the number of elements (non-zero and remaining elements) for the sparse column is stored in nb_zeros_col, and next column is processed.

**Implementation example of end of buffer management with packed sparsity and zeroes insertion before the last elements**

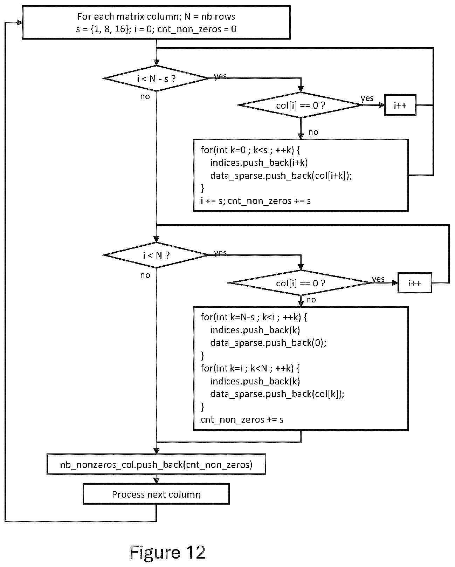

In the case of packed sparsity, a similar process can be used, but the data in the output column sparse_data are contiguous data from original column and indices within a block are contiguous values. A similar process as previously is used except a complete block of contiguous data and its corresponding indices are added to the output each tim a non-zero element is encountered. An example is depicted in Figure 12.

Inputs are the original matrix column col, its length N, the packing block size s. Outputs are the non-zero elements data_sparse, the number of elements per column in data_sparse nb_nonzeros_col, the offset indices of each non zero coefficient indices.

In the first part, element are checked one by one, increasing I, until a non-zero element is found in the input column. When a non-zero element is found, a block of size s elements are pushed to the output column, with their indices and their count is increased by s, while i < N - s the process loops.

Then, if i<N, it is checked whether there is a non-zero element in the remaining and stops at the first one. If there is a non-zero element, a new block is created with indices corresponding to the last elements of the column, the values in sparse data are set to zero until index i of the non-zero element, the remaining are copied from input column data. Then the number of elements (non-zero and remaining elements) for the sparse column is stored in nb_zeros_col, and next column is processed.

**Only one index per block for packed sparsity**

In a variant, when packed sparsity is used, only the index of the first non-zero element of each block is needed. This can save memory, storage space for the model, and accelerate computations.

This property can be used at signaling, or in an initialization step as a preprocessing when the model is loaded

**Packed sparsity detection**

The packed sparsity can be manually defined when designing the model, or it can be detected offline as a post processing of the model, before storing, or as a preprocessing in an initialization step when the model is loaded, if packed sparsity is detected, the method above is used to create data for computation phase. This is independent of the signaling.

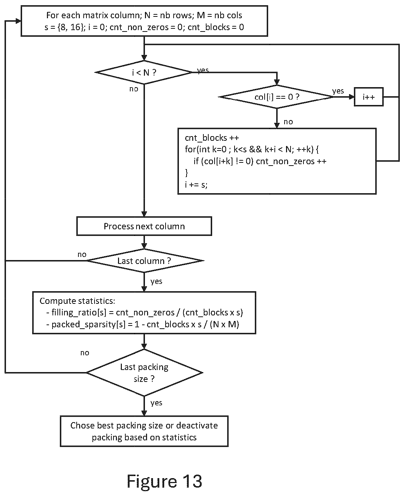

The process is depicted on Figure 13. The matrix data is studied, column by column, for each value of possible packing size s. The index i is incremented until the next non-zero value is found. Then the block count cnt_blocks is incremented, and s elements of the column col are read, the number of non-zero values cnt_non_zeros being incremented at each non-zero value.

When all the columns have been processed, statistics are computed, such as the block filling ratio (e.g. number of non-zeros divided by number of elements in non-zero blocks), and the packed sparsity (e.g. one minus the number of elements in non-zero blocks divided by the total number of elements in the matrix.

When all the packing size have been evaluated, the packed sparsity is chosen as the best packing size, or disabled if packing is not efficient. For example, an efficient packing has a high packed sparsity (above 60%, and a high block filling ratio (above 50%). The packing size is the one giving the higher values.

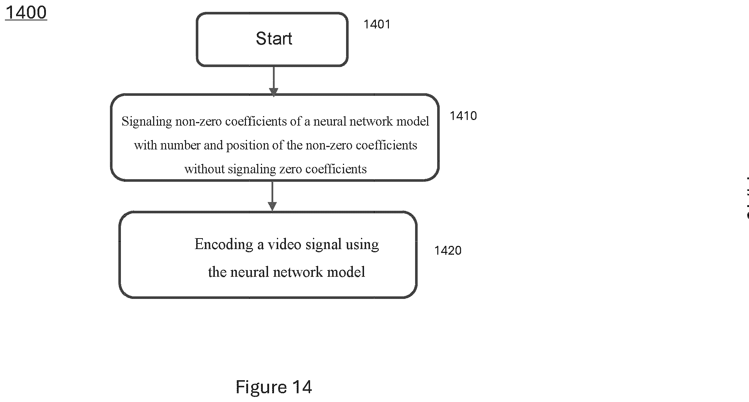

One embodiment of a method 1400 under the general aspects described here is shown in Figure 14. The method commences at start block 1401 and control proceeds to block 1410 for signaling non-zero coefficients of a neural network model with number and position of the non-zero coefficients without signaling zero coefficients. Control proceeds from block 1410 to block 1420 for encoding a video signal using the neural network model.

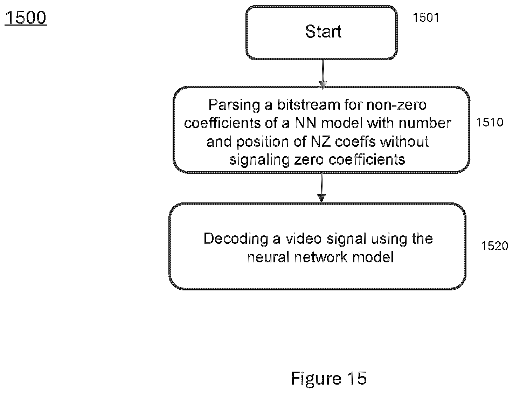

One embodiment of a method 1500 under the general aspects described here is shown in Figure 15. The method commences at start block 1501 and control proceeds to block 1510 for parsing a data stream for non-zero coefficients of a neural network model with number and position of the non-zero coefficients without signaling zero coefficients. Control proceeds from block 1510 to block 1520 for decoding a video signal using the neural network model.

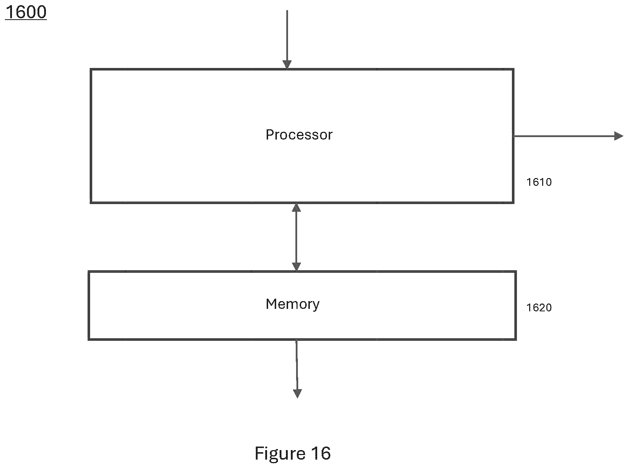

Figure 16 shows one embodiment of an apparatus 1600 for encoding, decoding, compressing or decompressing, or filtering of video data using the aforementioned methods. The apparatus comprises Processor 1610 and can be interconnected to a memory 1620 through at least one port. Both Processor 1610 and memory 1620 can also have one or more additional interconnections to external connections.

Processor 1610 is also configured to either insert or receive information in a bitstream and, either compressing, encoding, or decoding using any of the described aspects.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

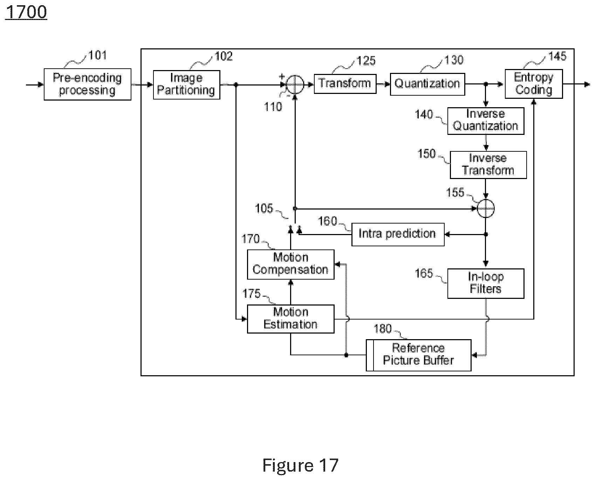

Figure 17 illustrates an example of a block-based hybrid video encoder 1700. Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 1700, a picture is encoded by the encoder elements as described below. The picture to be encoded is partitioned (102) and processed in units of, for example, CUs (Coding Units). Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements such as the picture partitioning information, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset)/ALF (Adaptive Loop Filter) filtering to reduce encoding artifacts. The filtered image is stored in a reference picture buffer (280).

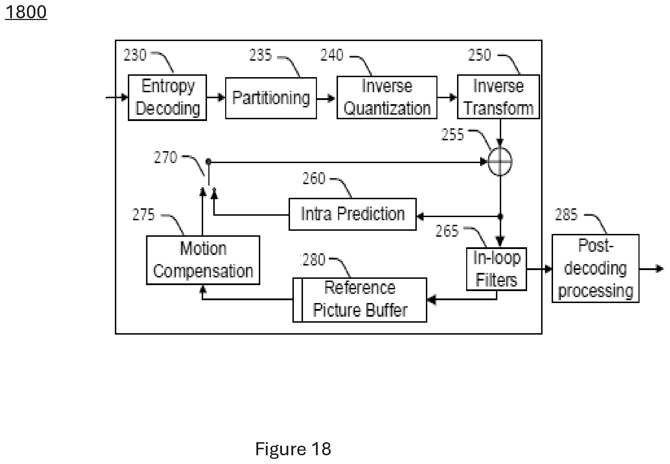

Figure 18 illustrates a block diagram of an example video decoder 1800. In the decoder 1800, a bitstream is decoded by the decoder elements as described below. Video decoder 1800 generally performs a decoding pass reciprocal to the encoding pass as described in Figure 17. The encoder 1700 also generally performs video decoding as part of encoding video data.

In particular, the input of the decoder includes a video bitstream, which can be generated by video encoder 1700. The bitstream is first entropy decoded (230) to obtain transform coefficients, prediction modes, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280). Note that, for a given picture, the contents of the reference picture buffer 280 on the decoder 1800 side is identical to the contents of the reference picture buffer 180 on the encoder 1700 side for the same picture.

The decoded picture can further go through post-decoding processing (285), for example, an inverse color transform (e.g., conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

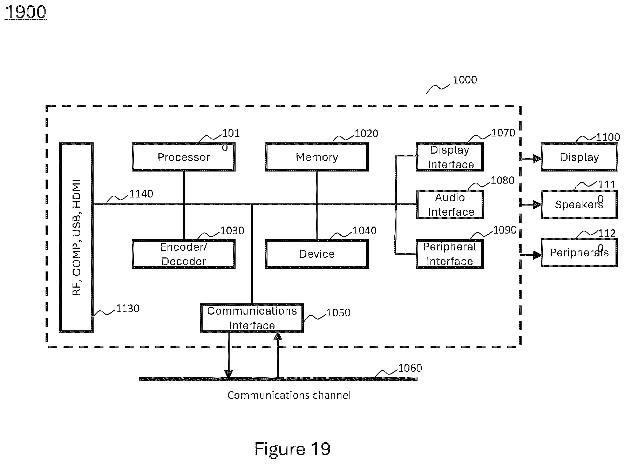

Figure 19 illustrates a block diagram of an example of a system in which various aspects and embodiments are implemented. System 1900 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1900, singly or in combination, can be embodied in a single integrated circuit (IC), multiple ICs, and/or discrete components. For example, in at least one embodiment, the processing and encoder/decoder elements of system 1900 are distributed across multiple ICs and/or discrete components. In various embodiments, the system 1900 is communicatively coupled to one or more other systems, or other electronic devices, via, for example, a communications bus or through dedicated input and/or output ports. In various embodiments, the system 1900 is configured to implement one or more of the aspects described in this document.

The system 1900 includes at least one processor 1010 configured to execute instructions loaded therein for implementing, for example, the various aspects described in this document. Processor 1010 can include embedded memory, input output interface, and various other circuitries as known in the art. The system 1900 includes at least one memory 1020 (e.g., a volatile memory device, and/or a non-volatile memory device). System 1900 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1900 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1900 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1900 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High *Definition* Multimedia Interface (HDMI) input terminal. Other examples, not shown in Figure 8, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1900 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface Ics or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1900 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1900 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1900, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1900 using a set-top box that delivers the data over the HDMI connection of the input block 1130. Still other embodiments provide streamed data to the system 1900 using the RF connection of the input block 1130. As indicated above, various embodiments provide data in a non-streaming manner. Additionally, various embodiments use wireless networks other than Wi-Fi, for example a cellular network or a Bluetooth network.

The system 1900 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or another device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1900. For example, a disk player performs the function of playing the output of the system 1900.

In various embodiments, control signals are communicated between the system 1900 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1900 via dedicated connections through respective interfaces 1070, 1080, and 1090. Alternatively, the output devices can be connected to system 1900 using the communications channel 1060 via the communications interface 1050. The display 1100 and speakers 1110 can be integrated in a single unit with the other components of system 1900 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments may refer to parametric models or rate distortion optimization. In particular, during the encoding process, the balance or trade-off between the rate and distortion is usually considered, often given the constraints of computational complexity. It can be measured through a Rate Distortion Optimization (RDO) metric, or through Least Mean Square (LMS), Mean of Absolute Errors (MAE), or other such measurements. Rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of a plurality of transforms, coding modes or flags. In this way, in an embodiment the same transform, parameter, or mode is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

The preceding sections describe a number of embodiments, across various claim categories and types. Features of these embodiments can be provided alone or in any combination.

**Claims**

1. A method comprising:

signaling non-zero coefficients of a neural network model with number and position of the non-zero coefficients without signaling zero coefficients; and,

encoding a video signal using the neural network model.

2. An apparatus, comprising memory and a processor, configured to perform:

signaling non-zero coefficients of a neural network model with number and position of the non-zero coefficients without signaling zero coefficients; and,

encoding a video signal using the neural network model.

3. A method, comprising:

parsing a data stream for non-zero coefficients of a neural network model with number and position of the non-zero coefficients without signaling zero coefficients; and,

decoding a video signal using the neural network model.

4. An apparatus, comprising memory and a processor, configured to perform:

parsing a data stream for non-zero coefficients of a neural network model with number and position of the non-zero coefficients without signaling zero coefficients; and,

decoding a video signal using the neural network model.

5. The method of any one of Claims 1 and 3, or the apparatus of any one of Claims 2 and 4, wherein a mechanism is used to retrieve a position of the non-zero coefficients.

6. The method or the apparatus of Claim 5, wherein the mechanism comprises signaling sparsity information for each tensor.

7. The method or the apparatus of Claim 5, wherein the mechanism comprises signaling packing information when a tensor is sparse.

8. The method or the apparatus of Claim 5, wherein data is read based on sparsity information and packing information.

9. The method or the apparatus of Claim 5, wherein signaling is performed at a higher level to indicate that sparsity information is present or is a particular value.

10. A device comprising:

an apparatus according to Claim 4; and

at least one of (i) an antenna configured to receive a signal, the signal including a video block, (ii) a band limiter configured to limit the received signal to a band of frequencies that includes the video block, and (iii) a display configured to display an output representative of the video block.

11. A non-transitory computer readable medium containing data content generated according to the method of any one of claims 1, 3, or 5 through 9, or by the apparatus of any one of claims 2, 4, or 5 through 9, for playback using a processor.

12. A signal comprising video data generated according to the method of any one of claims 1, or 3, or 5 through 9, or by the apparatus of any one of claims 2, or 4, or 5 through 9, for playback using a processor.

13. A non-transitory computer program product comprising instructions which, when the program is executed by a computer, cause the computer to carry out the method of any one of claims 1, or 3 or 5 through 9.

Figure 1

Figure 2

A    X    B    =    Y

Figure 3

Figure 4

Figure 5

Figure 6

Read number of **dimensions** of the matrix

For each dimension: read **size**

Sparsity storage enabled ?

yes → Read element **isSparse**

isSparse == true ?

no →

yes → Read element **sparsityBlockSize**

Read total number of non-zero elements **nbNonZeroElements**

Read number of non-zero elements per column **NbNonzerosCol**

Read row indices of non-zero elements **indices**

Read non-zero matrix elements **data**

no → Initialize full matrix

Read matrix **data**

Figure 7

Figure 8

Figure 9

Figure 10

For each matrix column; N = nb rows
s = {1, 8, 16}; i = 0; cnt_non_zeros = 0; k=0

i < N − (s − k) ?  — yes

col[i] == 0 ?  — yes → i++

no

indices.push_back(i)
data_sparse.push_back(col[i]);
k =( k+1) % s
i++; cnt_non_zeros++

no

k > 0 ?  — yes

no

while(i<N) { indices.push_back(i); data_sparse.push_back(col[i]); cnt_non_zeros++; i++}

tail = i

i < N ?  — yes

no

col[i] == 0 ?  — yes → i++

no

for(int i=N-s ; i<tail ; ++i) { indices.push_back(i); data_sparse.push_back(0) }
while(i<N) { indices.push_back(i);  data_sparse.push_back(col[i]); i++ }
cnt_non_zeros += s

nb_nonzeros_col.push_back(cnt_non_zeros)

Process next column

Figure 11

For each matrix column; N = nb rows
s = {1, 8, 16}; i = 0; cnt_non_zeros = 0

i < N - s ?  yes / no

col[i] == 0 ?  yes → i++

no

```
for(int k=0 ; k<s ; ++k) {
    indices.push_back(i+k)
    data_sparse.push_back(col[i+k]);
}
i += s; cnt_non_zeros += s
```

i < N ?  yes / no

col[i] == 0 ?  yes → i++

no

```
for(int k=N-s ; k<i ; ++k) {
    indices.push_back(k)
    data_sparse.push_back(0);
}
for(int k=i ; k<N ; ++k) {
    indices.push_back(k)
    data_sparse.push_back(col[k]);
}
cnt_non_zeros += s
```

nb_nonzeros_col.push_back(cnt_non_zeros)

Process next column

Figure 12

For each matrix column; N = nb rows; M = nb cols
s = {8, 16}; i = 0; cnt_non_zeros = 0; cnt_blocks = 0

i < N ?  — yes

no

col[i] == 0 ?  — yes — i++

no

```
cnt_blocks ++
for(int k=0 ; k<s && k+i < N; ++k) {
    if (col[i+k] != 0) cnt_non_zeros ++
}
i += s;
```

Process next column

Last column ?  — no

yes

Compute statistics:
- filling_ratio[s] = cnt_non_zeros / (cnt_blocks x s)
- packed_sparsity[s] = 1 - cnt_blocks x s / (N x M)

Last packing size ?  — no

yes

Chose best packing size or deactivate packing based on statistics

Figure 13

1400

Start

1401

Signaling non-zero coefficients of a neural network model with number and position of the non-zero coefficients without signaling zero coefficients

1410

Encoding a video signal using the neural network model

1420

Figure 14

1501

Start

1510

Parsing a bitstream for non-zero coefficients of a NN model with number and position of NZ coeffs without signaling zero coefficients

1520

Decoding a video signal using the neural network model

Figure 15

1500

1600

Processor

1610

Memory

1620

Figure 16

1700

Figure 17

1800

Figure 18

EP 4 718 846 A1

1900

Figure 19

Europäisches
Patentamt

European
Patent Office

Office européen
des brevets

# EUROPEAN SEARCH REPORT

**Application Number**

EP 24 30 6569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/103550 A1 (APPU ABHISHEK [US] ET AL) 8 April 2021 (2021-04-08) * paragraphs [0219], [0229], [0386], [0387] * | 1-13 | INV. H04N19/426 H04N19/70 H04N19/93 |
| X | CN 116 842 304 A (PEOPLE'S LIBERATION ARMY NATIONAL UNIVERSITY OF DEFENSE TECHNOLOGY) 3 October 2023 (2023-10-03) * paragraphs [0096] - [0113]; figures 2, 3 * | 1-13 | |
| X | US 2021/089864 A1 (DALLY WILLIAM J [US] ET AL) 25 March 2021 (2021-03-25) * paragraphs [0113] - [0122] * | 1-13 | |
| X | US 2021/149852 A1 (SOMBATSIRI SALITA [JP]) 20 May 2021 (2021-05-20) * paragraphs [0034] - [0038], [0057] * | 1-13 | |
| A | US 2023/014367 A1 (RACAPE FABIEN [US] ET AL) 19 January 2023 (2023-01-19) * paragraphs [0038] - [0047], [0071] - [0076], [0080] - [0082] * | 1-13 | TECHNICAL FIELDS SEARCHED (IPC) H04N |

The present search report has been drawn up for all claims

| Place of search | Date of completion of the search | Examiner |
|---|---|---|
| Munich | 22 February 2025 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 718 846 A1

## ANNEX TO THE EUROPEAN SEARCH REPORT
## ON EUROPEAN PATENT APPLICATION NO.

EP 24 30 6569

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2025

| Patent document cited in search report | | Publication date | Patent family member(s) | | Publication date |
|---|---|---|---|---|---|
| US 2021103550 | A1 | 08-04-2021 | AU | 2020241262 A1 | 04-11-2021 |
| | | | BR | 112021016106 A2 | 09-11-2021 |
| | | | BR | 112021016138 A2 | 04-01-2022 |
| | | | CN | 112534404 A | 19-03-2021 |
| | | | CN | 112534405 A | 19-03-2021 |
| | | | CN | 112905240 A | 04-06-2021 |
| | | | CN | 112905241 A | 04-06-2021 |
| | | | CN | 113383310 A | 10-09-2021 |
| | | | DE | 112020000846 T5 | 18-11-2021 |
| | | | DE | 112020001249 T5 | 23-12-2021 |
| | | | EP | 3938888 A1 | 19-01-2022 |
| | | | EP | 3938889 A1 | 19-01-2022 |
| | | | EP | 3938890 A1 | 19-01-2022 |
| | | | JP | 7408671 B2 | 05-01-2024 |
| | | | JP | 7423644 B2 | 29-01-2024 |
| | | | JP | 7494197 B2 | 03-06-2024 |
| | | | JP | 2022523760 A | 26-04-2022 |
| | | | JP | 2022523761 A | 26-04-2022 |
| | | | JP | 2022523762 A | 26-04-2022 |
| | | | JP | 2024036383 A | 15-03-2024 |
| | | | KR | 20210135998 A | 16-11-2021 |
| | | | KR | 20210135999 A | 16-11-2021 |
| | | | KR | 20210136994 A | 17-11-2021 |
| | | | SG | 11202107290Q A | 29-09-2021 |
| | | | US | 2021035258 A1 | 04-02-2021 |
| | | | US | 2021103550 A1 | 08-04-2021 |
| | | | US | 2021374897 A1 | 02-12-2021 |
| | | | US | 2023351543 A1 | 02-11-2023 |
| | | | US | 2024161227 A1 | 16-05-2024 |
| | | | WO | 2020190807 A1 | 24-09-2020 |
| | | | WO | 2020190808 A1 | 24-09-2020 |
| | | | WO | 2020190809 A1 | 24-09-2020 |
| CN 116842304 | A | 03-10-2023 | NONE | | |
| US 2021089864 | A1 | 25-03-2021 | US | 2018046900 A1 | 15-02-2018 |
| | | | US | 2021089864 A1 | 25-03-2021 |
| US 2021149852 | A1 | 20-05-2021 | JP | 6911949 B2 | 28-07-2021 |
| | | | JP | 2020525930 A | 27-08-2020 |
| | | | US | 2021149852 A1 | 20-05-2021 |
| | | | WO | 2019008661 A1 | 10-01-2019 |
| US 2023014367 | A1 | 19-01-2023 | CN | 114930344 A | 19-08-2022 |
| | | | EP | 4078455 A1 | 26-10-2022 |
| | | | KR | 20220119643 A | 30-08-2022 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 6569

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2025

| Patent document cited in search report | Publication date | Patent family member(s) | | Publication date |
|---|---|---|---|---|
| | | US | 2023014367 A1 | 19-01-2023 |
| | | WO | 2021127408 A1 | 24-06-2021 |

For more details about this annex : see Official Journal of the European Patent Office, No. 12/82

EPO FORM P0459

page 2 of 2